# EUROPEAN PATENT SPECIFICATION

(11) **EP 3 828 427 B1**
(45) Date of publication and mention of the grant of the patent: **14.02.2024**
(21) Application number: 19211502.0
(22) Date of filing: 26.11.2019
(51) Int. Cl.: F16B 13/06, F16B 23/00, F16B 25/00, F16B 35/06

(54) **AN APPARATUS AND METHOD FOR SECURING AN ITEM TO A WALL OR CEILING**
VORRICHTUNG UND VERFAHREN UM EINEN GEGENSTAND AN EINER WAND ODER AN EINER DECKE ZU BEFESTIGEN
DISPOSITIF ET MÉTHODE POUR ACCROCHER UN ÉLÉMENT SUR UN MUR OU UN PLAFOND

(43) Date of publication of application: 02.06.2021
(73) Proprietor: Ruxton, Edward, Skerries, County Dublin K34 A313 (IE)
(72) Inventor: Ruxton, Edward, Skerries, County Dublin K34 A313 (IE)
(74) Representative: White, Jonathan Patrick

(56) References cited:
- EP-A1- 2 872 707
- EP-A1- 3 372 848
- CN-U- 207 864 374
- DE-A1-102009 045 345
- IE-A2- S20 070 564
- US-A- 3 922 831

## Description

The present invention relates to an apparatus and method for securing an item to a wall or ceiling, and more particularly, although not exclusively, a wall or ceiling having multiple layers and/or a cavity, such as a concrete or masonry wall or ceiling with a dry lined layer.

Securing a heavy object to a concrete or masonry wall or ceiling typically involves drilling a hole into the wall and inserting a standard expanding anchor into the hole. By rotating a bolt provided with the anchor an expansion sleeve of the anchor expands to secure the anchor in the wall thereby enabling the object to be installed on the wall.

Many walls and ceilings are constructed by a technique called dry lining and include one or more layers of material in addition to the concrete or masonry substrate. A dry lined wall or ceiling typically comprises a concrete substrate layer and additional layers of several different types of materials, the most common including fiberglass and plasterboard, a layer of foam insulation laminated onto plasterboard, sound proofing and plasterboard or an air cavity and plasterboard. In recent years, building regulations and the cost of home heating have resulted in dry lining as deep as, or more than, 125mm.

However, the use of standard anchor systems in such dry lined walls and ceilings presents difficulties since the concrete substrate layer of the wall and ceilings that supports the expanding anchor is inaccessible due to the depth of the wall and ceiling layers. The same issues arise in buildings having external insulation or external cladding. In these situations, a standard wall anchor is unusable.

US Patent No. 3,922,831 A discloses an expansion anchor sleeve is adapted for insertion into an expansion anchor hole and has a leading end and a trailing end. An expander member is located at the leading end and can be drawn into the sleeve for expanding the same. An externally threaded bolt has a front portion which extends through the sleeve and engages the expander member to draw the same into the latter, and a rear portion which projects outwardly beyond the trailing end of the sleeve and the expansion anchor hole. A tapped sleeve is threaded onto the rear portion and on its end facing away from the expansion anchor sleeve the tapped sleeve is formed with a head; it also has external threads. An abutment member is threaded into the tapped sleeve and clamps between itself and the head an object through which the tapped sleeve extends.

It is therefore an object of the present invention to provide an apparatus and method for securing an item to a dry lined wall or ceiling that goes at least some way toward overcoming the above problems and/or which will provide the public and/or industry with a useful alternative.

Further aspects of the present invention will become apparent from the ensuing description which is given by way of example only.

According to the invention, there is provided an apparatus for securing an item to a concrete or masonry dry lined wall or ceiling as defined in the appended claims.

The apparatus comprises driving means to actuate the main body.

The second end of the main body is adapted for engagement with the driving means.

According to the invention the driving means comprises a driving body and a locking head, in which the locking head comprises a threaded portion for engagement in a screw threaded through bore of the driving body, whereby the driving body carrying the locking head is secured to the main body and actuated to engage the threaded portion with the main body to rotate the main body.

According to the invention actuation by rotation of the driving body on the main body engages the second end of the main body against the free end of the threaded portion of the locking head.

According to the invention a collar extends around an end of the driving body and is configured with a recess to accommodate a locking pin, and the locking head comprises a head portion and a stepped collar between the head portion and the threaded portion, in which a receiver slot or cam is formed in the stepped collar for receiving the locking pin when the locking head is engaged with the driving body.

Preferably, the locking pin is configured when pressed to extend from the collar of the driving body into the receiver slot or cam of the locking head and operable to abut against the stepped collar when the locking head is rotated to thereby limit rotation of the locking head in the driver body by a predetermined number of degrees to prevent the stepped collar of the locking head from making contact with the collar of the driving body. There is a gap between the collar of the driving body and the stepped collar of the locking head when the driving body and locking head are connected.

Preferably, the predetermined number of degrees is 60 degrees, 75 degrees, 90 degrees or any number of degrees as required. Ideally, the predetermined number of degrees is 60 degrees.

Preferably, the driving means is operable to apply a twisting or screwing force to actuate the main body by rotation.

Alternatively, the main body may optionally be configured with a driving tip at an end thereof, the driving tip being contoured and shaped, such as with a slot, to cooperate with driving means provided as a screwdriver, wrench (such as an "Allen wrench") or other implement operable for engaging directly with the main body. Actuation of the screwdriver, wrench or other driving implement in a conventional manner will impart a rotational force to the main body to actuate the main body.

The driving means may thus be provided as a driving body and a locking head as above, or as a screwdriver, wrench or other implement for engaging directly with the main body to rotate and actuate the main body.

Preferably, the first end of the main body is externally threaded for engagement with a complimentary thread of the gripping means.

Preferably, the second end of the main body is externally threaded for engagement with a complimentary thread of the driving means.

Preferably, the second end of the main body is longer than the first end of the main body.

Preferably, regions of the main body adjacent to the collar and between the first and second ends are unthreaded.

Preferably, the main body is a stud. The stud may be configured to a length as required or as desired depending on the wall or ceiling depth.

Preferably, the stud is a double ended threaded stud bolt.

The main body may be made of any material as required or as desired, such as metal, metal alloy, plastic or composite.

Preferably, the gripping means is an expanding anchor. The expanding anchor comprises a sleeve with one or more expanding fins that are actuated by an internally screw threaded tapered cone or plug having a through bore.

Preferably, the expanding anchor is activated when the anchor collar thereof abuts against the collar of the main body when the main body is actuated.

It will be understood that the expanding anchor is a fixing device configured with an expansion mechanism operable to compress against the concrete substrate layer of the dry lined wall or ceiling. The expansion mechanism of the anchor may be provided as a sleeve with expanding elements, such as fins, that are actuated by an internally screw threaded tapered cone or plug.

The sleeve of the expanding anchor is sized and dimensioned to be slidable along the main body of the apparatus.

Preferably, the main body and the collar are integrally formed as a single piece. Alternatively, the main body and the collar are separately formed.

Preferably, the collar is fixed to the main body. Alternatively, the collar is movable on the main body. Preferably, the collar extends radially from the main body.

Preferably, the collar is circular in shape. Alternatively, the collar may be square, hexagonal or other shape as required.

Preferably, the main body has an outside diameter of 4, 6, 8, 10, 12, 14 or more millimetres (M4, M6, M8, M10, M12, M14 or more) or the respective imperial equivalents thereof.

Preferably, the apparatus further comprises a threaded spacer bushing means secured to the second end of the main body. The bushing means comprises a tapered or square flanged head to seat the bushing flush with the wall or ceiling and seal the opening of the drilled hole. Optionally, a screwdriver slot is provided on the flanged head to aid installation of the bushing.

Preferably, the apparatus further comprises a mounting plate operable to be secured to the second end of the main body. The mounting plate comprises gripping teeth to prevent the mounting plate from rotating during installation. A nut/washer recess is included to conceal the nut and washer and maintain a flat surface to work with. The mounting plate may be configured according to any desired size. Self-tapping screws may then be used to secure an object to the plate.

According to the invention, there is provided a method for securing an item to a wall or ceiling using the above apparatus, the method comprising steps of:
drilling a hole into a multi-layered wall or ceiling such that the hole extends into a concrete substrate layer of the wall or ceiling;
attaching the expanding anchor to the first end of the main body;
inserting the main body and the expanding anchor into the hole such that the expanding anchor is positioned in the concrete substrate layer and at least a portion of the second end of the main body extends out of the hole; and
actuating the main body by a twisting or screwing action such that the collar engages with and activates the gripping means.

According to the invention the step of actuating the main body comprises using a driving means to apply a twisting or screwing force to the main body.

Preferably, the method comprises a further step of fitting a spacer bushing to the second end of the main body.

Preferably, the method comprises a further step of fitting a mounting plate to the second end of the main body.

Any combination of desired diameter/length/ratio may be provided for the main body of the present invention. Most fastener manufacturers maintain a very limited diameter/length ratio so that if a deep or long fastener is required the main body of such fittings are limited to large diameter (high load) fasteners. Conversely, if a smaller diameter (lower load) fastener is needed, you are typically limited to short lengths so that if the requirement is for a small diameter (low load) long fastener, this is not possible. The main body and collar may be manufactured to any diameter/length ratio as required with the option of a universal length cut to the length required by the end user.

Wall or ceiling anchors achieve two objectives when used to anchor an object to a wall or ceiling. The first objective is to secure the anchor onto the wall or ceiling and the second objective is to clamp an object to the anchor itself. These two objectives are achieved in a single step whereby torque or compressive forces used are exerted on both the anchor and the object being clamped to the wall or ceiling.

This may be contrasted with the apparatus of present invention in which uses a distinctly two-step process wherein, in the first step, the main body with the gripping means anchor attached thereto is positioned and secured to the wall or ceiling by driving means such that the torque and compressive forces required are exerted on the expanding/shield anchor only. The second step involves installing the threaded bushing or mounting plate to the end of the main body and on the wall or ceiling, followed by securing the object being installed on the wall or ceiling to the free end of the main body that extends from the hole through the threaded bushing or mounting plate. The torque and compressive forces involved in this step are exerted only on the object being installed. The two distinct steps of the present invention ensure that their associated forces are independent of each other, allowing for a more controlled and precise installation. For example, the present invention ensures that use of high torque may be used to secure the expanding/shield anchor gripping means and main body in position, but low torque may be used for clamping a delicate object onto the main body stud that would otherwise be easily damaged with excessive compressive forces.

As noted, most mechanical anchors utilise a one step process to achieve the objective of providing a fixing for securing an item to a wall or ceiling. As a result, they are unsuitable for use on dry lined walls or ceilings since without proper backing support mechanical anchors will crush and destroy the dry lining material. Most mechanical anchors are too short to handle even a modest thickness of dry lining material. The present invention by providing a main body with a deeper reach facilitates access for any depth requirement to position the gripping means in the concrete layer, and by providing a threaded spacer bushing isolates the compressive forces away from the dry lined surface. This ensures a solid and secure installation, regardless of the depth or composition of the dry lined material.

The potential uses for the present invention are endless and include kitchen cabinet installation, plumbing fixture installation, mounting radiators and boilers, mounting pipe brackets and air conditioning ducting piping and works, installing large external or internal light fixtures, installing heavy window blinds and curtains installing handrails and many more. The present invention may be used temporarily and easily removed, resulting in little damage to the wall or ceiling mounting surface.

Although reference in the following will be made by example of the present invention being operable to secure an item to a dry lined wall it will be understood that the invention is adapted for securing an item to a wall, a ceiling or other dry lined surface as required or as desired.

The invention will be more clearly understood from the following description of some embodiments thereof, given by way of example only, with reference to the accompanying drawings, in which:
FIG 1 is a side diagrammatic of an apparatus configured according to the invention shown in use in a multi-layered wall with a spacer bushing;
FIG 2 is a side diagrammatic of the apparatus of FIG 1 with a mounting plate;
FIG 3 is a side view of a main body of the apparatus of FIGS 1 and 2 according to the invention;
FIG 4 are alternative end tips which may optionally be provided at one or each end of the main body shown in FIG 3;
FIG 5 is a simplified diagrammatic of an expanding anchor;
FIGS 6A and 6B are sectional and views from above of a spacer bushing according to the invention;
FIGS 7A to 7C are sectional, side diagrammatic and view from above of a mounting plate according to the invention;
FIG 8 is a side sectional exploded view of a driving means according to the invention;
FIG 9 is a side view of the driving means shown in FIG 8;
FIG 10A is a side view of a locking head of the driving means shown in FIG 8 and FIG 9;
FIG 10B is a view from below of a stepped collar of the locking head shown in FIG 10A;
FIG 10C is a top view of a head of the locking head shown in FIG 10A;
FIG 11A is a side view of a driving body of the driving means shown in FIGS 8 and 9;
FIG 11B is a view from below of the driving body shown in FIG 11A, and
FIG 11C is a top view of the driving body shown in FIG 11A.

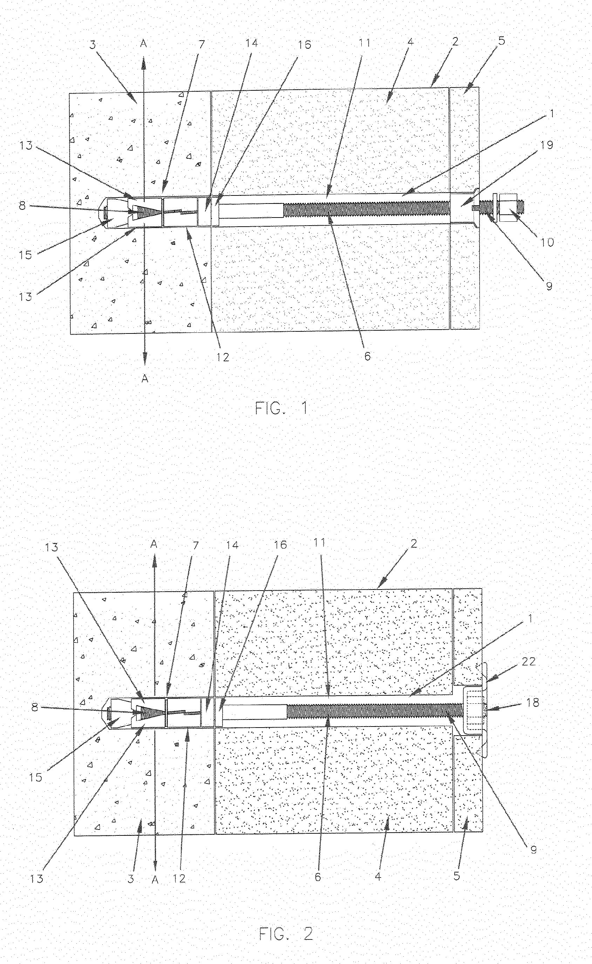

Referring to the drawings, and initially to FIGS 1 to 5, there is shown an apparatus, indicated generally by the reference numeral 1, for securing an item to a wall, the wall indicated generally by the reference numeral 2. In the instance shown the wall 2 is a dry lined wall comprising a concrete or masonry substrate layer 3, an insulation layer 4 and an additional layer of material 5, such as plasterboard. It will be understood that the layer of foam insulation 4 may be laminated onto the plasterboard 5. It will be further understood that the wall 2 shown is given by way of example only and may include additional or less layers of material, and/or one or more cavities as required or as desired depending on the specific requirements of the building application. The layers 3, 4, 5 may also be constructed with alternative materials. A cladding layer may also be provided. Reference in the following to a concrete substrate layer 3, an insulation layer 4 and a plasterboard layer should therefore not be seen as limiting.

The apparatus 1 comprises a main body 6 and a gripping means 7, the main body 6 having a first end 8 for engagement with the gripping means 7 and a second end 9 for engagement with the item (not shown) being secured to the wall 2 (note: a securing nut 10 for the item being secured is shown). The first end 8 of the main body 6 is threaded externally for engagement with a complimentary internal thread of the gripping means 7.

The main body 6 is dimensioned to be of a length sufficient to extend through a hole 11 formed in the wall 2 and to locate the gripping means 7 when secured to the main body 6 within the concrete or masonry substrate layer 3 of the dry lined wall 2 and such that the second end 9 extends sufficiently out of the hole 11 for receiving an item being secured to the wall 2. In the instance shown, the main body 6 is provided as a stud configured to a length as required or as desired depending on the depth of the wall 2. The stud 6 may be configured as a double ended threaded stud bolt. The stud 6 may be made of any material as required or as desired, such as metal, metal alloy, plastic or composite.

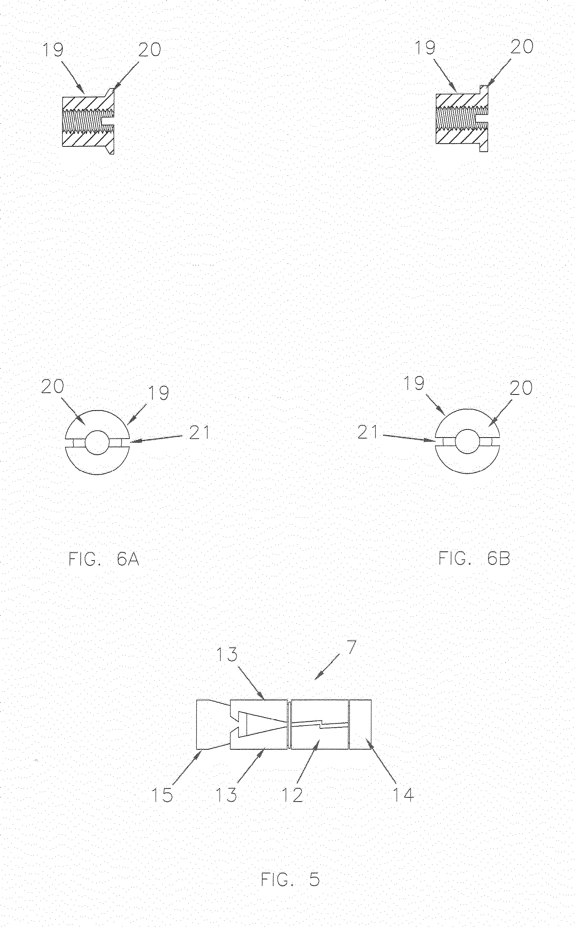

As shown in FIG 5, the gripping means 7 is provided as an expanding anchor. The expanding anchor 7 comprises an expanding mechanism provided as a sleeve 12 with one or more expanding fins 13 and an anchor collar 14. The fins 13 of the sleeve 12 are actuated by an internally screw threaded tapered cone or plug 15 having a screw threaded through bore.

A collar 16 extends radially from the main body 6, and the main body 6 and the collar 16 are integrally formed as a single piece, although it will be understood that these components may be separately formed. The collar 16 is fixed to the main body 6, although it may be configured to be non-unitary and movable on the main body 6. The collar 16 is provided on the main body 6 intermediate the first and second ends 8, 9 and is operable to engage with and activate the expanding anchor 7 when the main body 6 is actuated. The collar 16 of the main body 6 thus acts as a stop against which the anchor collar 14 of the expanding anchor 7 acts during actuation of the main body 6.

Specifically, the expanding anchor 7 is activated when the anchor collar 14 thereof abuts against the collar 16 of the main body 6 when the main body 6 is actuated. In operation, the cone or plug 15 of the expanding anchor 7 engages with and is drawn into the sleeve 12 along the screw thread of the main body 6 by the twisting or screwing actuation of the main body 6. As the cone 15 moves into the sleeve 12 the expanding fins 13 of the sleeve 12 are pushed outwardly in the direction of arrows 'A' (Figures 1 and 2) to forcibly engage against the concrete substrate layer 3. The expanding fins 13 thus compress against the concrete substrate layer 3 of the drilled hole 11, thereby enabling the anchor 7 to transfer the load of the item secured to the wall 2 to the concrete layer 3.

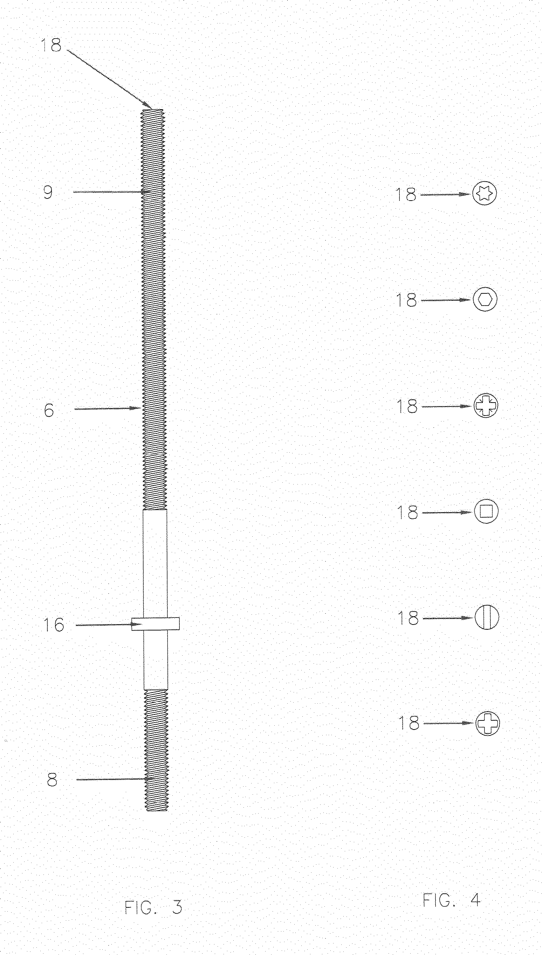

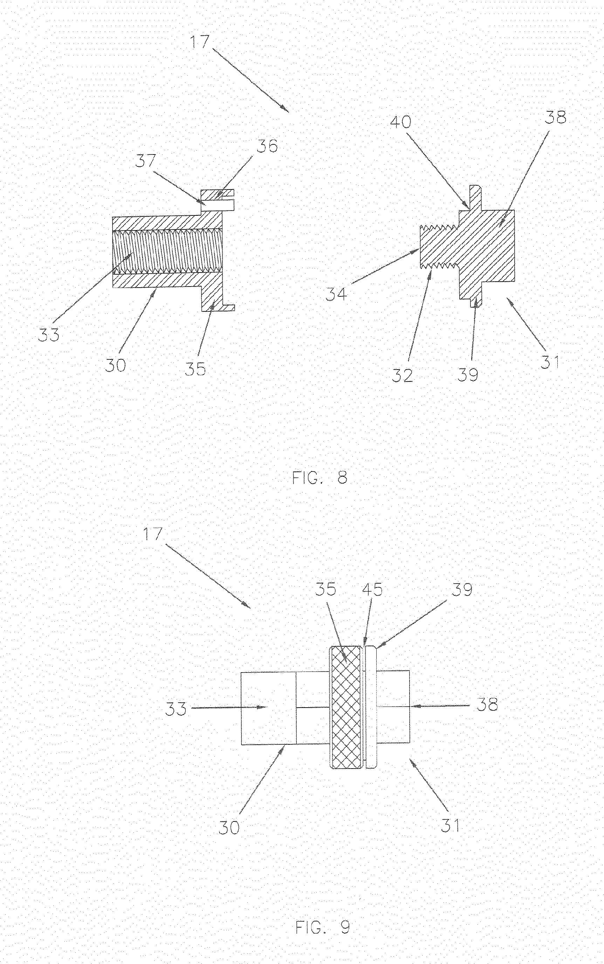

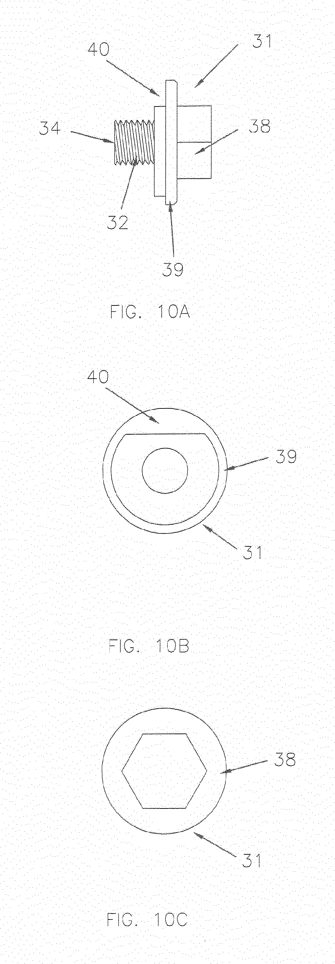

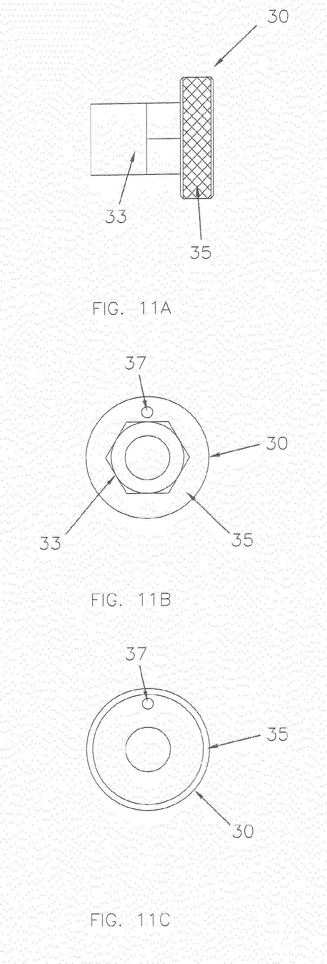

Actuation of the main body 6 is provided by driving means 17 operable to engage with the second end 9 of the main body 6 and to apply a twisting or screwing force to the main body stud 6 to rotate the main body 6 in the hole 11. As shown in FIG 4, the second end 9 of the main body 6 may be configured with a driving tip 18 contoured and shaped with a slot to cooperate with driving means provided as a screw-driver, wrench or other implement. The second end 9 of the main body 8 is also externally threaded for engagement with a complimentary thread of the driving means 17 described in connection with FIGS 8 to 11.

As shown in FIGS 1 and 6A and 6B, the apparatus 1 further comprises a threaded spacer bushing means 19 secured to the second end 9 of the main body 6. The bushing means 19 comprises a tapered flanged head 20 (as shown in FIG 6A) or square flanged head 20 (as shown in FIG 6B) to position the threaded spacer bushing 19 flush with the wall 2 and seal the opening of the drilled hole 11. Optionally, a screwdriver slot 21 is provided on the flanged head to aid installation of the bushing. The spacer bushing means 19 is internally screw threaded for complimentary engagement with the second end 9 of the main body 6. The threaded bushing 19 provides a secure backing for the item being secured to the wall 2, prevents the dry lining layer 4 of the wall 2 from being crushed or deformed, seals the drilled hole in the plasterboard 5 to contain any dirt or dust that may result from the drilling operation and eliminates tension between the expanding anchor 7 and the item being secured onto the wall 2. The threaded spacer bushing means 19 may be secured to any position along the second end 9 of the main body stud 6 to accommodate any and varying depths of the dry lining in the wall or ceiling.

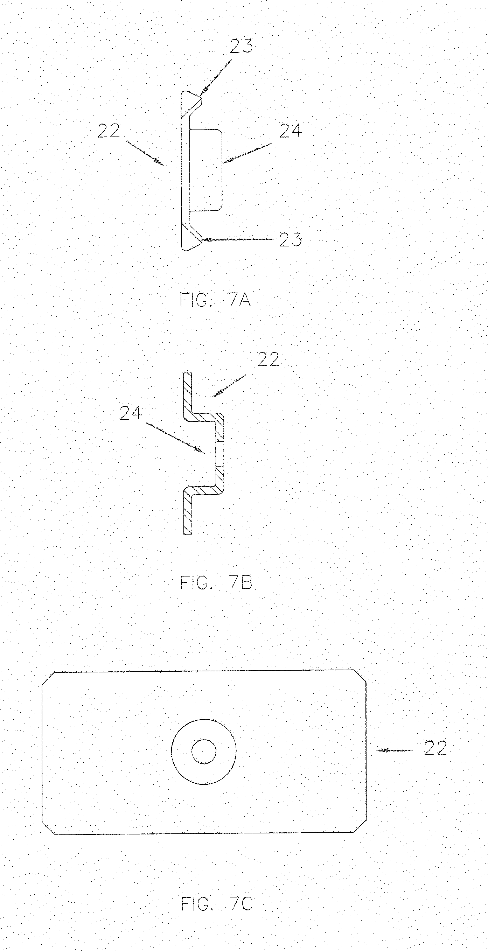

As shown in FIGS 2 and 7A to 7C, the apparatus 1 further comprises a mounting plate 22 operable to be secured to the second end 9 of the main body 6. The mounting plate 22 is optionally used in place of the spacer bushing 19. As shown in FIG 7A, the mounting plate 22 comprises gripping teeth 23 to prevent the mounting plate 22 from rotating during installation. As shown in FIG 7B, a nut/washer recess 24 is included to conceal the nut and washer and maintain a flat surface to work with.

The mounting plate 22 provides a mounting surface configured when secured to the second end 9 of the main body 6 to be flush with the wall 2. The plate 22 helps to conceal or hide the threaded main body stud 6 (and additional washer and nut) from view to aid an aesthetic finish. Screws may be used to secure an object to the flush mount plate 22. The flush mount plate 22 may be sized as required or as desired to ensure that it is concealed by the object secured to the wall.

As shown in FIGS 8 to 11, the driving means 17 comprises a driving body, indicated generally by the reference numeral 30, and a locking head, indicated generally by the reference numeral 31. The locking head 31 comprises an elongate threaded portion 32 for engagement in a screw threaded through bore 33 of the driving body 30. The driving body 30 may have a hexagonally shaped perimeter.

A collar 35 extends around an end of the driving body 30 and is configured with a through hole 36 to accommodate a locking pin 37. The collar 35 may be knurled to facilitate ease of engagement. The locking head 31 comprises a head portion 38, which may have a hexagonally shaped perimeter, and a stepped collar 39 between the head portion 38 and the threaded portion 32. A receiver slot or cam 40 is formed in the stepped collar 39 for receiving the locking pin 37 when the locking head 31 engages with the driving body 30.

The locking pin 37 is configured as a "press fit" type pin which when pressed from the underside of the collar 35 extends into the receiver slot or cam 40 of the locking head 31 and abuts against the stepped collar 39 when the locking head 31 is rotated in the driving body 30. Such a feature thereby limits rotation of the locking head in the driver body by a predetermined number of degrees. The predetermined number of degrees is 60 degrees. It will however be understood that the predetermined number of degrees is determined by the size of the cam 40 which is formed by removing a chord portion of the smaller of the two discs forming the stepped collar 39.

The locking pin 37 also ensures that the stepped collar 39 of the locking body 31 is not in contact with the collar 35 of the driving body 30. A gap 45 is provided between the collar 35 and stepped collar 39.

In use, the driving body 30 carrying the locking head 31 is secured to the second end 9 of main body stud 6 and actuated by rotation to engage the tip 34 of the threaded portion 32 with the tip 18 of the main body 6 to rotate the main body 6. Thus, actuation by rotation of the driving body 30 on the main body 6 engages the second end 9 of the main body 6 against the free end or tip 34 of the threaded portion 32.

The driving means 17 is screwed onto the main body stud 6 until the threaded portion 32 of the locking head 31 makes contact with the second end 9 of the main body 6. Using a socket/ spanner or power tool, rotating the driving means 17 clockwise until the desired torque is achieved secures the main body stud 6 into the gripping device or shield anchor 7.

To release the driving means 17 from the main body stud 6 the driving means 17 is rotated counter-clockwise so that the locking head 31 of the driving means 17 will rotate (within the predetermined degree limit) sufficiently to release the grip on the main body 6. As the counter-clockwise rotation continues, the locking pin 37 will make contact with the cam 40 on the driving body 30 and the driving means 17 will unscrew and so be released from the main body 6.

The driving means 17 may be used to remove the main body 6 by initially attaching by screwing the screw threaded bore end 33 of the driving body 30 onto the main body 6 until it is fully seated. By applying clockwise screw actuation sufficient torque will be applied to the driving means 17 which will connect and lock to the main body 6. By placing an open-ended spanner on the driving body 30 and rotating counter-clockwise the main body 6 will then unscrew from the gripping device 7. The driving means 17 may be removed from the main body 6 by rotating the locking head 31 counter-clockwise while gripping the driving body 30 of the driving means 17 with the open-ended spanner. This will unlock the driving means 17 from the main body 6.

The driving means 17 has numerous advantageous features including that it is usable manually or with powered driving tools, it has knurled collar 35 to allow easy rotation by hand, it is suitable for installing and remove threaded main body studs 6, it has only two moving parts - being the driving body 30 and the locking head 31, the same sized driver is used for the driving means and the stud hardware and it may be scaled up as required for any size of main body stud 6.

The method for securing an item to the wall using the apparatus 1 comprises steps of: drilling a hole 11 into a multi-layered wall such that the hole extends into a concrete substrate layer 3 of the wall 2; attaching the expanding anchor 7 to the first end 8 of the main body 6; inserting the main body 6 and the expanding anchor 7 into the hole 11 such that the expanding anchor 7 is positioned in the concrete substrate layer 3 and at least a portion of the second end 9 of the main body 6 extends out of the hole 11; and actuating the main body 6 by a twisting or screwing action using the driving means 17 such that the collar 16 engages with and activates the gripping means 7 such that the expanding fins 13 compress against the concrete substrate layer 3 of the drilled hole 11, thereby enabling the anchor 7 to transfer the load of the item being secured to the wall 2 to the concrete layer 3.

In practice an installer selects and uses the driving means 17 to manually by hand or automatically (in the instance that the driving means is a powered by electricity, battery etc) apply a twisting or screwing force to the main body 6. To complete the installation the installer may optionally fit the spacer bushing 19 or mounting plate 22 to the second end 9 of the main body 6 such that the main body 6 extends through the mounting plate 22 or spacer bushing 19 for attachment of the item being secured to the wall.

Aspects of the present invention have been described by way of example only and it should be appreciated that additions and/or modifications may be made thereto without departing from the scope thereof as defined in the appended claims.

## Claims

1. An apparatus (1) for securing an item to a concrete or masonry dry lined wall or ceiling (2), the apparatus (1) comprising:
a main body (6) and a gripping means (7), the main body (6) having a first end (8) for engagement with the gripping means (7) and a second end (9) for engagement with an item being secured to the wall or ceiling (2);
a collar (16) is provided on the main body (6) intermediate the first and second ends (8, 9) and is operable to engage with and activate the gripping means (7) when the main body (6) is actuated,
**characterised in that** the apparatus (1) further comprises driving means (17) to actuate the main body (6), and the second end (9) of the main body (6) is adapted for engagement with the driving means (17), wherein the driving means (17) is operable to apply a twisting or screwing force to actuate the main body (6) by rotation thereof, in which the driving means (17) comprises a driving body (30) and a locking head (31), in which the locking head (31) comprises a threaded portion (32) for engagement in a screw threaded through bore (33) of the driving body (30), whereby the driving body (30) carrying the locking head (31) is secured to the main body (6) and actuated to engage the threaded portion (32) with the main body (6) to rotate the main body (6), and in which a collar (35) extends around an end of the driving body (30) and is configured with a recess (36) to accommodate a locking pin (37), and the locking head (31) comprises a head portion (38) and a stepped collar (39), in which a receiver slot or cam (40) is formed in the stepped collar (39) for receiving the locking pin (37) when the locking head (31) is engaged with the driving body (30).

2. The apparatus (1) claimed in Claim 1, in which the main body (6) is of a length sufficient to extend through a hole (11) formed in the wall or ceiling (2) and to locate the gripping means (7) when secured to the main body (6) within a concrete or masonry substrate layer (3) of the dry lined wall or ceiling (2).

3. The apparatus (1) claimed in Claim 1 or Claim 2, in which the main body (6) is a double ended threaded stud bolt.

4. The apparatus (1) claimed in any one of the preceding claims, in which the gripping means (7) is an expanding anchor (7) comprising a sleeve (12) and anchor collar (14), the sleeve (12) having one or more expanding fins (13) that are actuated by an internally screw threaded tapered cone or plug (15) having a through bore.

5. The apparatus (1) claimed in Claim 4, in which the expanding anchor (7) is activated when the anchor collar (14) thereof abuts against the collar (16) of the main body (6) when the main body (6) is actuated.

6. The apparatus (1) claimed in any one of the preceding claims, in which the main body (6) and the collar (16) of the main body (6) are integrally formed as a single piece and the collar (16) is fixed to the main body (6).

7. The apparatus (1) claimed in any one of the preceding claims, in which the apparatus (1) further comprises a threaded spacer bushing means (19) secured to the second end (9) of the main body (6), the threaded spacer bushing means (19) comprises a tapered or square flanged head (20) to position the threaded spacer bushing means (19) flush with the wall or ceiling (2), in which the main body (6) extends through the threaded spacer bushing means (19) when the threaded spacer bushing means (19) is fixed to the main body (6).

8. The apparatus (1) claimed in any one of the preceding claims, in which the apparatus (1) further comprises a mounting plate (22) operable to be secured to the second end (9) of the main body (6), the mounting plate (22) comprises gripping teeth to prevent the mounting plate (22) from rotating during installation, in which the main body (6) extends through the mounting plate (22) when the mounting plate (22) is fixed to the main body (6).

9. The apparatus (1) claimed in Claim 1, in which the locking pin (37) is configured when pressed to extend from the collar (35) of the driving body (30) into the receiver slot or cam (40) of the locking head (31) and is operable to abut against the stepped collar (39) when the locking head (31) is rotated and limit rotation of the locking head (31) in the driving body (30) by a predetermined number of degrees to prevent the stepped collar (39) of the locking head (31) from making contact with the collar(35) of the driving body (30).

10. A method for securing an item to a dry lined wall or ceiling (2) using an apparatus (1) as claimed in any one of Claims 1 to 9, the method comprising steps of:
drilling a hole (11) into a multi-layered wall or ceiling (2);
attaching the expanding anchor (7) to the first end (8) of the main body (6);
inserting the main body (6) and the expanding anchor (7) into the hole (11) such that the expanding anchor (7) is positioned in a concrete substrate layer (3) of the wall or ceiling (2) and at least a portion of the second end (9) of the main body (6) extends out of the hole (11); and
actuating the main body (6) with the driving means (17) to apply a twisting or screwing action such that the collar (16) of the main body (6) engages with and activates the gripping means (7).

11. The method as claimed in Claim 10, comprising a further step of fitting a threaded spacer bushing means (19) to the second end (9) of the main body (6) in the wall or ceiling (2) such that the main body (6) extends through the threaded spacer bushing means (19) when the threaded spacer bushing means (19) is fixed to the main body (6).

12. The method as claimed in Claim 11, the method comprising a further step of fitting the mounting plate (22) to the second end (9) of the main body (6) such that the main body (6) extends through the mounting plate (22) when the mounting plate (22) is fixed to the main body (6).

## Patentansprüche

1. Vorrichtung (1) zum Befestigen eines Gegenstandes an einer trocken ausgekleideten Wand oder Decke (2) aus Beton oder Mauerwerk, wobei die Vorrichtung (1) umfasst:
einen Hauptkörper (6) und ein Spannmittel (7), wobei der Hauptkörper (6) ein erstes Ende (8) zum Eingriff mit dem Spannmittel (7) und ein zweites Ende (9) zum Eingriff mit einem an der Wand oder Decke (2) zu befestigenden Gegenstand aufweist,
ein Bund (16) wird auf dem Hauptkörper (6) zwischen dem ersten und dem zweiten Ende (8, 9) bereitgestellt und ist funktionsfähig, um mit dem Spannmittel (7) in Eingriff zu kommen und es zu aktivieren, wenn der Hauptkörper (6) betätigt wird,
**dadurch gekennzeichnet, dass** die Vorrichtung (1) ferner ein Antriebsmittel (17) umfasst, um den Hauptkörper (6) zu betätigen, und das zweite Ende (9) des Hauptkörpers (6) für den Eingriff mit dem Antriebsmittel (17) angepasst ist, wobei das Antriebsmittel (17) funktionsfähig ist, um eine Dreh- oder Schraubkraft aufzubringen, um den Hauptkörper (6) durch dessen Drehung zu betätigen, wobei das Antriebsmittel (17) einen Antriebskörper (30) und einen Verriegelungskopf (31) umfasst, wobei der Verriegelungskopf (31) einen Gewindeabschnitt (32) zum Eingriff in eine Gewindedurchgangsbohrung (33) des Antriebskörpers (30) umfasst, wodurch der den Verriegelungskopf (31) tragende Antriebskörper (30) an dem Hauptkörper (6) befestigt und betätigt wird, um den Gewindeabschnitt (32) mit dem Hauptkörper (6) in Eingriff zu bringen, um den Hauptkörper (6) zu drehen, und wobei sich ein Bund (35) um ein Ende des Antriebskörpers (30) herum erstreckt und mit einer Aussparung (36) zur Aufnahme eines Verriegelungsstifts (37) konfiguriert ist, und der Verriegelungskopf (31) einen Kopfabschnitt (38) und einem abgestuften Bund (39) umfasst, wobei in dem abgestuften Bund (39) ein Aufnahmeschlitz oder Nocken (40) zur Aufnahme des Verriegelungsstifts (37) ausgebildet ist, wenn der Verriegelungskopf (31) mit dem Antriebskörper (30) in Eingriff ist.

2. Vorrichtung (1) nach Anspruch 1, wobei der Hauptkörper (6) eine ausreichende Länge aufweist, um sich durch ein in der Wand oder Decke (2) ausgebildetes Loch (11) zu erstrecken und das Spannmittel (7), wenn es am Hauptkörper (6) befestigt ist, innerhalb einer Beton- oder Mauerwerk-Untergrundschicht (3) der trocken ausgekleideten Wand oder Decke (2) anzubringen.

3. Vorrichtung (1) nach Anspruch 1 oder Anspruch 2, wobei der Hauptkörper (6) ein zweiseitiger Schraubenbolzen ist.

4. Vorrichtung (1) nach einem der vorhergehenden Ansprüche, wobei das Spannmittel (7) ein Spreizdübel (7) ist, der eine Hülse (12) und einen Dübelbund (14) umfasst, wobei die Hülse (12) eine oder mehrere Spreizrippen (13) aufweist, die durch einen mit einem Innengewinde versehenen konischen Kegel oder Dübel (15), der eine Durchgangsbohrung aufweist, betätigt werden.

5. Vorrichtung (1) nach Anspruch 4, bei der der Spreizdübel (7) aktiviert wird, wenn der Dübelbund (14) davon an den Bund (16) des Hauptkörpers (6) anstößt, wenn der Hauptkörper (6) betätigt wird.

6. Vorrichtung (1) nach einem der vorhergehenden Ansprüche, wobei der Hauptkörper (6) und der Bund (16) des Hauptkörpers (6) aus einem Stück ausgebildet sind und der Bund (16) an dem Hauptkörper (6) angebracht ist.

7. Vorrichtung (1) nach einem der vorhergehenden Ansprüche, wobei die Vorrichtung (1) ferner ein Abstandsgewindebuchsenmittel (19) umfasst, das am zweiten Ende (9) des Hauptkörpers (6) befestigt ist, das Abstandsgewindebuchsenmittel (19) einen konischen oder vierkantigen Flanschkopf (20) umfasst, um das Abstandsgewindebuchsenmittel (19) bündig mit der Wand oder Decke (2) zu positionieren, wobei sich der Hauptkörper (6) durch das Abstandsgewindebuchsenmittel (19) erstreckt, wenn das Abstandsgewindebuchsenmittel (19) am Hauptkörper (6) angebracht ist.

8. Vorrichtung (1) nach einem der vorhergehenden Ansprüche, wobei die Vorrichtung (1) ferner eine Montageplatte (22) umfasst, die funktionsfähig ist, um an dem zweiten Ende (9) des Hauptkörpers (6) befestigt zu werden, wobei die Montageplatte (22) Spannzähne umfasst, um die Montageplatte (22) zu hindern, sich während der Installation zu drehen, wobei sich der Hauptkörper (6) durch die Montageplatte (22) erstreckt, wenn die Montageplatte (22) an dem Hauptkörper (6) angebracht ist.

9. Vorrichtung (1) nach Anspruch 1, wobei der Verriegelungsstift (37) konfiguriert ist, um sich vom Bund (35) des Antriebskörpers (30) in den Aufnahmeschlitz oder Nocken (40) des Verriegelungskopfes (31) zu erstrecken, wenn er gedrückt wird, und funktionsfähig ist, um gegen den abgestuften Bund (39) zu stoßen, wenn der Verriegelungskopf (31) gedreht wird, und die Drehung des Verriegelungskopfes (31) im Antriebskörper (30) durch eine vorbestimmte Anzahl von Graden zu begrenzen, um den abgestuften Bund (39) des Verriegelungskopfes (31) zu hindern, mit dem Bund(35) des Antriebskörpers (30) einen Kontakt herzustellen.

10. Verfahren zum Befestigen eines Gegenstandes an einer trocken ausgekleideten Wand oder Decke (2) durch Verwenden einer Vorrichtung (1) nach einem der Ansprüche 1 bis 9, wobei das Verfahren die folgenden Schritte umfasst:
Bohren eines Lochs (11) in eine mehrschichtige Wand oder Decke (2);
Anbringen des Spreizdübels (7) an das erste Ende (8) des Hauptkörpers (6);
Einsetzen des Hauptkörpers (6) und des Spreizdübels (7) in das Loch (11), sodass der Spreizdübel (7) in einer Betonuntergrundschicht (3) der Wand oder Decke (2) positioniert wird und mindestens ein Abschnitt des zweiten Endes (9) des Hauptkörpers (6) sich aus dem Loch (11) heraus erstreckt, und
Betätigen des Hauptkörpers (6) mit dem Antriebsmittel (17), um eine Dreh- oder Schraubwirkung aufzubringen, sodass der Bund (16) des Hauptkörpers (6) mit dem Spannmittel (7) in Eingriff kommt und es aktiviert.

11. Verfahren nach Anspruch 10, umfassend einen weiteren Schritt des Anbringens eines Abstandsgewindebuchsenmittels (19) an das zweite Ende (9) des Hauptkörpers (6) in der Wand oder Decke (2), sodass sich der Hauptkörper (6) durch das Abstandsgewindebuchsenmittel (19) erstreckt, wenn das Abstandsgewindebuchsenmittel (19) am Hauptkörper (6) angebracht ist.

12. Verfahren nach Anspruch 11, wobei das Verfahren einen weiteren Schritt des Anbringens der Montageplatte (22) an das zweite Ende (9) des Hauptkörpers (6) umfasst, sodass sich der Hauptkörper (6) durch die Montageplatte (22) erstreckt, wenn die Montageplatte (22) an dem Hauptkörper (6) angebracht ist.

## Revendications

1. Appareil (1) pour fixer un article à un mur ou plafond en béton ou maçonnerie à enduit sec (2), l'appareil (1) comprenant :
un corps principal (6) et des moyens de préhension (7), le corps principal (6) comportant une première extrémité (8) destinée à venir en prise avec les moyens de préhension (7) et une seconde extrémité (9) destinée à venir en prise avec un article en cours de fixation au mur ou plafond (2) ;
un collier (16) est prévu sur le corps principal (6) entre les première et seconde extrémités (8, 9) et est utilisable pour venir en prise avec et activer les moyens de préhension (7) lorsque le corps principal (6) est actionné,
**caractérisé en ce que** l'appareil (1) comprend en outre des moyens d'entraînement (17) pour actionner le corps principal (6), et la seconde extrémité (9) du corps principal (6) est adaptée pour venir en prise avec les moyens d'entraînement (17), dans lequel les moyens d'entraînement (17) sont utilisables pour appliquer une force de torsion ou de vissage pour actionner le corps principal (6) par rotation de celui-ci, dans lequel les moyens d'entraînement (17) comprennent un corps d'entraînement (30) et une tête de verrouillage (31), dans lequel la tête de verrouillage (31) comprend une partie filetée (32) destinée à venir en prise dans une vis filetée à travers un alésage (33) du corps d'entraînement (30), moyennant quoi le corps d'entraînement (30) portant la tête de verrouillage (31) est fixé au corps principal (6) et actionné pour mettre en prise la partie filetée (32) avec le corps principal (6) afin de faire tourner le corps principal (6), et dans lequel un collier (35) s'étend autour d'une extrémité du corps d'entraînement (30) et est configuré avec un évidement (36) pour recevoir une goupille de verrouillage (37), et la tête de verrouillage (31) comprend une partie de tête (38) et un collier étagé (39), dans lequel une fente ou une came de réception (40) est formé dans le collier étagé (39) pour recevoir la goupille de verrouillage (37) lorsque la tête de verrouillage (31) est en prise avec le corps d'entraînement (30).

2. Appareil (1) selon la revendication 1, dans lequel le corps principal (6) a une longueur suffisante pour s'étendre à travers un trou (11) formé dans le mur ou plafond (2) et pour localiser les moyens de préhension (7) lorsque fixé au corps principal (6) à l'intérieur d'une couche de substrat en béton ou maçonnerie (3) du mur ou plafond à enduit sec (2).

3. Appareil (1) selon la revendication 1 ou la revendication 2, dans lequel le corps principal (6) est un goujon fileté à double extrémité.

4. Appareil (1) selon l'une quelconque des revendications précédentes, dans lequel les moyens de préhension (7) sont un ancrage expansible (7) comprenant un manchon (12) et un collier d'ancrage (14), le manchon (12) comportant une ou plusieurs ailettes expansibles (13) qui sont actionnées par un cône ou un bouchon conique à filetage interne (15) comportant un alésage traversant.

5. Appareil (1) selon la revendication 4, dans lequel l'ancrage expansible (7) est activé lorsque son collier d'ancrage (14) vient en butée contre le collier (16) du corps principal (6) lorsque le corps principal (6) est actionné.

6. Appareil (1) selon l'une quelconque des revendications précédentes, dans lequel le corps principal (6) et le collier (16) du corps principal (6) sont formés d'un seul tenant en une seule pièce et le collier (16) est fixé au corps principal (6).

7. Appareil (1) selon l'une quelconque des revendications précédentes, dans lequel l'appareil (1) comprend en outre des moyens de douille d'espacement filetée (19) fixés à la seconde extrémité (9) du corps principal (6), les moyens de douille d'espacement filetée (19) comprennent une tête à bride conique ou carrée (20) pour positionner les moyens de douille d'espacement filetée (19) en affleurement avec le mur ou plafond (2), dans lequel le corps principal (6) s'étend à travers les moyens de douille d'espacement filetée (19) lorsque les moyens de douille d'espacement filetée (19) sont fixés au corps principal (6).

8. Appareil (1) selon l'une quelconque des revendications précédentes, dans lequel l'appareil (1) comprend en outre une plaque de montage (22) utilisable pour être fixée à la seconde extrémité (9) du corps principal (6), la plaque de montage (22) comprend des dents de préhension pour empêcher la plaque de montage (22) de tourner pendant l'installation, dans lequel le corps principal (6) s'étend à travers la plaque de montage (22) lorsque la plaque de montage (22) est fixée au corps principal (6).

9. Appareil (1) selon la revendication 1, dans lequel la goupille de verrouillage (37) est configurée lorsqu'elle est pressée pour s'étendre depuis le collier (35) du corps d'entraînement (30) dans la fente ou came de réception (40) de la tête de verrouillage (31) et est utilisable pour venir en butée contre le collier étagé (39) lorsque la tête de verrouillage (31) est tournée et limiter la rotation de la tête de verrouillage (31) dans le corps d'entraînement (30) d'un nombre prédéterminé de degrés pour empêcher le collier étagé (39) de la tête de verrouillage (31) d'entrer en contact avec le collier(35) du corps d'entraînement (30).

10. Procédé pour fixer un article à un mur ou plafond à enduit sec (2) en utilisant un appareil (1) selon l'une quelconque des revendications 1 à 9, le procédé comprenant les étapes de :
perçage d'un trou (11) dans un mur ou plafond multicouche (2) ;
fixation de l'ancrage expansible (7) à la première extrémité (8) du corps principal (6) ;
insertion du corps principal (6) et de l'ancrage expansible (7) dans le trou (11) de telle sorte que l'ancrage expansible (7) soit positionné dans une couche de substrat en béton (3) du mur ou plafond (2) et au moins une partie de la seconde extrémité (9) du corps principal (6) s'étende hors du trou (11) ; et
actionnement du corps principal (6) avec les moyens d'entraînement (17) pour appliquer une action de torsion ou de vissage de telle sorte que le collier (16) du corps principal (6) vienne en prise avec et active les moyens de préhension (7).

11. Procédé selon la revendication 10, comprenant une étape supplémentaire d'ajustement de moyens de douille d'espacement filetée (19) sur la seconde extrémité (9) du corps principal (6) dans le mur ou plafond (2) de telle sorte que le corps principal (6) s'étende à travers les moyens de douille d'espacement filetée (19) lorsque les moyens de douille d'espacement filetée (19) sont fixés au corps principal (6).

12. Procédé selon la revendication 11, le procédé comprenant une étape supplémentaire d'ajustement de la plaque de montage (22) sur la seconde extrémité (9) du corps principal (6) de telle sorte que le corps principal (6) s'étende à travers la plaque de montage (22) lorsque la plaque de montage (22) est fixée au corps principal (6).
